# EUROPEAN PATENT APPLICATION

(11) **EP 3 597 332 A1**
(43) Date of publication of application: **22.01.2020**
(21) Application number: 18184133.9
(22) Date of filing: 18.07.2018
(51) Int. Cl.: B22F 3/105, B33Y 10/00, B33Y 30/00, B33Y 50/02, B29C 64/153, B29C 64/393, B29C 64/282

(54) **SYSTEM, DEVICE AND METHOD OF ADDITIVELY MANUFACTURING A COMPONENT**

(71) Applicant: Siemens Aktiengesellschaft, 80333 München (DE)
(72) Inventor: NANDULA, Phani, 5344202 West Godavari Dist, Andhrapradesh (IN); FARAHBOD-STERNAHL, Lena, 12167 Berlin (DE); CHAITANYA, O.V.R. Krishna, 560067 Bangalore, Karnataka (IN)
(74) Representative: Patentanwaltskanzlei WILHELM & BECK

(57) **Abstract**

A system (100) for additively manufacturing a component is disclosed. The component includes a plurality of layers. The system (100) including a plurality of energy transmitting devices (106) associated with at least one of a plurality of regions (104) of a work space (102) which when the component is being manufactured houses the component. The plurality of regions (104) in the work space (102) is associated with regions of the component when manufactured. The system characterized by an energy optimizing device (110) comprising a memory (114) with a computing unit (112) configured to selectively energize the plurality of the energy transmitting devices (106). The system is configured to manufacture each of the plurality of layers for the plurality of regions (104) simultaneously.

## Description

The present invention relates to additive manufacturing. Specifically relates to additive manufacturing using laser sources.

Additive Manufacturing (AM) utilizes an energy source to melt layers of powdered metal such that a desired component is manufactured layer by layer. Current AM techniques also utilize multiple energy sources in order to improve the productivity and reduce the build time for the component. The usage of multiple energy sources address the issue of improving productivity by reducing build time i.e. by layering multiple parts of the component in parallel. However, such AM techniques do not address quality issues, which may result in lower component quality as compared to that of a single energy source.

The above mentioned problem may be addressed by increasing the number of energy sources and by controlling them simultaneously. There are several challenges associated with this method such as coordination among different energy sources, usage rate of the energy sources, source-to-source variation and maintenance of the energy sources.

Accordingly, the object of the present invention is to manufacture the component with reduced build time and improved quality using AM.

The object of the invention is achieved by a system for additively manufacturing a component that includes an energy optimizing device. The energy optimizing device configured to selectively energize a plurality of energy transmitting devices.

The component manufactured layer by layer by the system. Each layer is manufactured region by region by melting powdered component in each region. The powdered component is melted by means of the plurality of energy transmitting devices.

Simultaneous melting of each layer is advantageous and could lead to reduction of defects such as porosity or delamination. This also might reduce residual stresses within the component, which would result in improved geometrical accuracy. Further, material properties of the component are uniform. For example, simultaneous melting results in uniform grain formation and thereby making the component homogeneous.

In an embodiment, the component is manufactured in a work space. Accordingly, when the component is being manufactured the work space houses the component. The work space is divided into a plurality of regions which are associated with regions of the component when manufactured.

The energy transmitting devices are divided between the regions in the work space. Energy received by the energy transmitting devices is optimized based on design objectives of the component.

The energy optimizing device includes a communication unit, a computing unit including at least one processor, a Graphical User Interface (GUI) and a memory unit communicating communicatively coupled to each other. The communication unit includes a transmitter, a receiver and Gigabit Ethernet port. Additionally, component designer can access the energy optimizing device via the GUI.

The memory is provided with modules stored in the form of computer readable instructions. The computing unit is configured to execute the defined computer program instructions in the modules. Further, the computing is configured to execute the instructions in the memory simultaneously.

In an embodiment, the energy optimizing device is configured on a cloud computing based platform or a distributed computing platform implemented as a service for analyzing data.

According to an embodiment of the present invention, the plurality of energy transmitting devices is an array of laser sources. In another embodiment, the energy transmitting devices include series of arrays.

The advantage of using an array of laser sources is that the build time is reduced. In addition, the part quality is improved by the selectively energizing the laser sources to melt a layer simultaneously. The simultaneous and selective energizing of the laser sources results in improved bonding of the powdered component. By this, the quality of an intermediate component surface is improved in view of the reduced defects. Accordingly, the productivity and the component quality are improved through the system.

According to another embodiment of the present invention, the memory includes a simulation module, a geometry module and an a energizing module. The simulation module generates a simulation of the manufacturing process & multi-physics simulation of component under operational loading. As used herein "simulation" comprises component parameters such as material parameters, geometry parameters, thermal parameters etc and output would be deformations, residual stresses etc. The term simulation also includes data associated with nature of use of the component and expected life of the component.

The geometry module in the memory is configured to determine component geometry based on the simulation of the component. The component geometry includes layer contours of each layer of the plurality of layers. In an embodiment, the geometry module is used to generate 3-Dimensional CAD (Computer Aided Drawings) from the simulation of the component. In another embodiment, the geometry module receives the 3-Dimensional CAD and determines the layer contours of each layer of the plurality of layers.

The memory further includes the energizing module configured to determine an energization pattern for each of the plurality of layers of the component based on the component geometry. As used herein "energization pattern" refers to the pattern of a layer that is melted based on the selective energization of the laser sources. The energization pattern for each layer is different and is determined by the layer contours. By defining the energization pattern for each layer the system is capable of manufacturing the component repeatedly within a predetermined tolerance. In other words, the system is capable of maintaining productivity during manufacture with minimum defect. Accordingly, the system ensures component quality pro-actively during manufacturing instead of a reactive post-processing quality check.

In an embodiment, the energization pattern determines positioning and alignment of laser sources. Accordingly, the energizing module generates the energization pattern depending on complexity of shapes in each layer. The complexity of shapes is included in the component geometry.

According to yet another embodiment of the present invention, the energizing module includes a learning module and optimization module. The learning module is configured to learn the energization pattern for each of the plurality of layers of the component from the component geometry. In an embodiment, the learning module comprises a neural network with a plurality of nodes. Each node is includes parameters of the CAD, such as layer contour, layer depth, strain and roughness in the region.

The optimization module is configured to optimize the energization pattern for each of the plurality of layers of the component for reduced defects including and not limited to reduced residual stress. The optimization module also includes a neural network that optimizes the energization pattern and the defect parameters of the component. The defect parameters include porosity, delamination, residual stresses, etc.

The object is also achieved by a method of additively manufacturing the component. In the method a plurality of energy transmitting devices are employed to manufacture the component. Further, the method includes selectively energizing the plurality of the energy transmitting device to manufacture each of the plurality of layers for plurality of regions simultaneously.

According to an embodiment of the present invention, the method includes generating a simulation of the component and determining component geometry based on the simulation of the component. Further, an energization pattern for each of the plurality of layers of the component is determined based on the component geometry. Furthermore, the method includes selectively energizing the plurality of the energy transmitting devices simultaneously based on the energization pattern.

According to another embodiment, the energization pattern determined by learning and optimization steps. Accordingly, the method includes learning the energization pattern for each of the plurality of layers of the component from the component geometry. Further, the method includes optimizing the energization pattern for each of the plurality of layers of the component for reduced defects including reduced residual stress.

According to yet another embodiment, the method includes localizing impact of the plurality of energy transmitting devices to associated regions of the plurality of regions and in each of the plurality of layers.

The method is advantageous as challenges of productivity and quality of an additively manufactured product is addressed. By using an array of energy transmitting devices and printing each layer, quality and speed is ensured. The quality is ensured because melting each layer at the same instant leads to a reduction of defects such as porosity or delamination and thereby reduction in residual stresses. Further, by reducing defects geometrical accuracy of the component is improved.

The method is also advantageous as machine dependent parameters such as scan pattern do not impact quality of the component. The present invention does not rely on pre-defined scan pattern rather the energizing pattern is defined by the layer contours and the component geometry.

According to an embodiment of the present invention, the step of optimizing the energization pattern includes selectively modifying parameters of at least one energy transmitting device associated with at least one region of the plurality of regions for reduced defects. Accordingly, the method includes determining activation of laser sources at specific positions (i.e. energy transmitting devices) based on the energization pattern.

By altering parameters associated with the operation of the energy transmitting devices we can avoid defects at critical locations. In other words, the method is advantageous to tailor properties for the region based on the operational usage of the component. Furthermore, through this method surface quality of each layer is improved by altering parameters of the energy transmitting devices to ensure improved surface finish.

According to yet another aspect of the invention, a device to enable additive manufacturing of a component is used to achieve the object of the invention. The device includes a receiver to receive sensor data from a plurality of sensors associated with the FSW operation. The device also includes a computing unit comprising one or more processors and a memory communicatively coupled to the processors. The memory includes modules that are implemented by the processors. The modules include an energizing module configured selectively energizes a plurality of energy transmitting devices simultaneously for each layer of the plurality of layers of the component.

According to an embodiment, the modules include a simulation module configured to generate a simulation of the component and a geometry module configured to determine the component geometry based on the simulation of the component.

According to another embodiment of the invention, the energizing module includes a learning module configured to learn an energization pattern for each of the plurality of layers of the component from the component geometry. The energizing module also includes an optimization module configured to optimize the energization pattern for each of the plurality of layers of the component for reduced defects including reduced residual stress.

According to yet another embodiment, the device is an edge computing device. As used herein "edge device" is a compact computing device that has a small form factor and resource constraints in terms of computing power. For example, an edge device includes a sensor with capability to connect to a communication network.

According to an embodiment of the present invention, the modules in the memory are implemented on an edge computing platform. Therefore, the modules are accessible to multiple manufacturers employing Additive Manufacturing Techniques.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
FIG 1 illustrates a system for additively manufacturing a component according to the present invention;
FIG 2 illustrates an array of laser sources according to FIG 1;
FIG 3 illustrates active laser sources according to FIG 1;
FIG 4 illustrates a device for additively manufacturing a component according to the present invention; and
FIG 5 illustrates steps performed to additively manufacturing a component according to the present invention.

Various embodiments are described with reference to the drawings, wherein like reference numerals are used to refer to like elements throughout. Further, numerous specific details are set forth in order to provide thorough understanding of one or more embodiments of the present invention. These examples must not be considered to limit the application of the invention to configurations disclosed in the figures. It may be evident that such embodiments may be practiced without these specific details

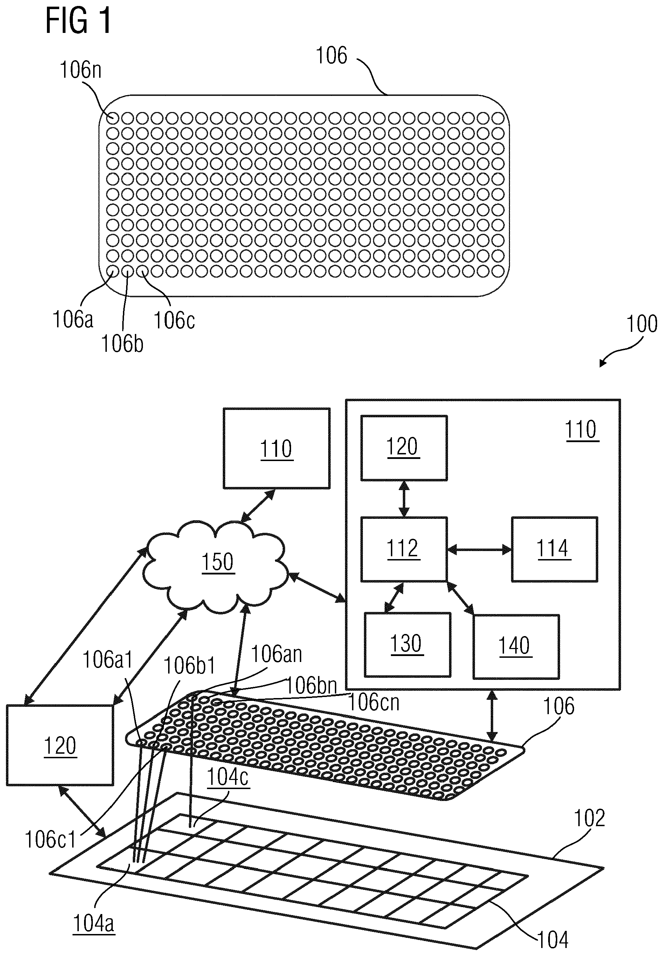

FIG 1 illustrates a system 100 for additively manufacturing a component (not shown in FIG 1) according to the present invention. The component manufactured layer by layer by the system and therefore includes a plurality of layers. The system 100 includes energy transmitting devices 106, an energy optimizing device 110, sensing unit 120 and a communication network 150.

The component is manufactured in a work space 102. Accordingly, when the component is being manufactured the work space 102 houses the component. The work space 102 is divided into a plurality of regions 104 which are associated with regions of the component when manufactured. For example, regions 104a and 104c may act like perimeter wall of the component after manufacture.

Each layer is manufactured region by region by melting powdered component in each region for each layer. The powdered component is melted by means of a plurality of energy transmitting devices 106. In FIG 1, the plurality of energy transmitting devices 106 include an array of individual laser sources. Accordingly, 106a1-106an is a first row of laser sources. Similar, array structure is followed for laser sources 106b1-106bn and 106c1-106cn.

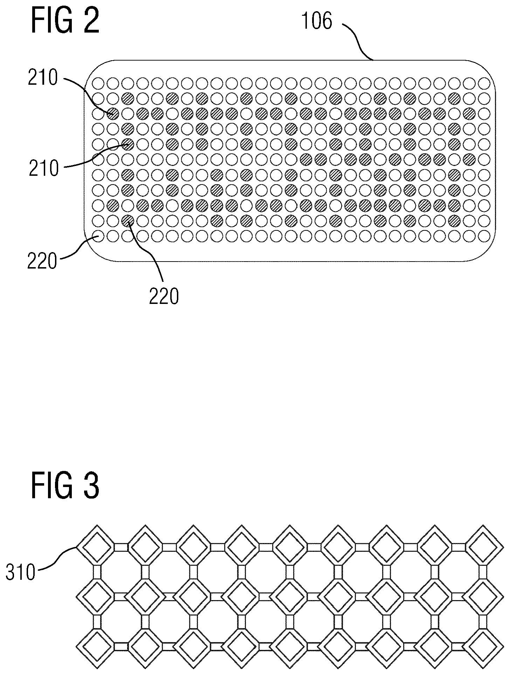

The laser sources 106 are divided between the regions 104 including regions 104a, and 104c. For example, the laser sources 106a1, 106b1 and 106c1 are used to manufacture the component in the region 104a and laser source 106an is used to manufacture the component in region 104c. Accordingly, at a given instant the laser sources 106a1, 106b1, 106c1 and 106an are selectively energized by an energy optimizing device 110. Therefore, the energy optimizing device 110 ensures that system 100 manufactures a layer for the regions 104a and 104c simultaneously. The aspect of selectively energizing the laser sources 106 in FIG 2 and FIG 3.

FIG 2 illustrates the array of laser sources 106 with active laser sources 210 and non-active laser sources 220. The active laser sources 210 may change for each layer of the component. The active laser sources 210 can also be depicted as a laser pattern. The laser pattern is depicted in FIG 3. As shown in FIG 3, the active laser sources 210 can be illustrated as the laser pattern 310. The laser pattern 310 is derived from an energizing pattern generated by the energy optimizing device 110.

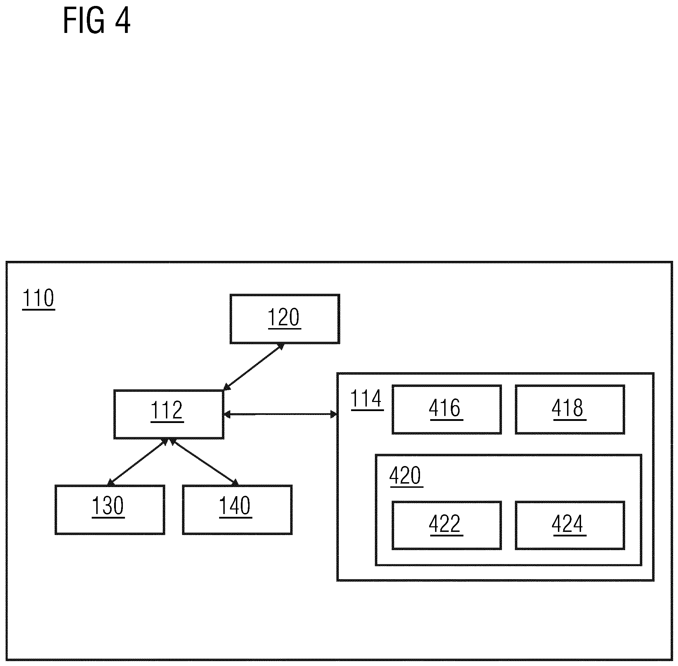

As shown in FIG 1, the energy optimizing device 110 includes a communication unit 130, a computing unit 112 including one or more processors, a Graphical User Interface (GUI) 140 and a memory 114 communicatively coupled to each other. In an embodiment, the energy optimizing device 110 also includes a sensing unit 120. In another embodiment, the sensing unit 120 is communicatively coupled to the energy optimizing device 110 through the communication network 150. The communication unit 130 includes a transmitter, a receiver and Gigabit Ethernet port. Additionally, component designer can access the energy optimizing device 110 via the GUI 140. The details of the energy optimizing device 110 and its operation are disclosed in FIG 4.

FIG 4 illustrates the energy optimizing device 110 with modules in the memory 114. The modules are implemented by the processors in the computing unit 112. The memory includes a simulation module 416, a geometry module 418 and an energizing module 420. The simulation module 416 generates a simulation of the component. The simulation includes component parameters such as material parameters, stress factors, residual stresses based on physics of the component.

The geometry module 418 is configured to determine component geometry based on the simulation of the component. The geometry module is used to generate 3-Dimensional CAD (Computer Aided Drawings) from the simulation of the component. The energizing module 420 determines an energization pattern for each of the plurality of layers of the component based on the component geometry. The energization pattern is the pattern of a layer that is melted based on the selective energization of the laser sources. The energization pattern is also depicted as the laser pattern (shown in FIG 3).

The energizing module 420 includes a learning module 422 and an optimization module 424. The learning module 422 is configured to learn the energization pattern for each of the plurality of layers of the component. The learning module 422 comprises AI algorithms that learn from a database of printed parts and are configured to suggest the optimal parameters that would enable improved quality with efficient utilization of the energy transmitting devices. For example, the learning module 422 is a neural module with a network of nodes. Inputs to these nodes include CAD geometry parameters, simulation parameters (such as predicted residual stress, potential defects such as porosity fraction, surface roughness etc), layer depth, powder features (such as particle size, mixture etc) and output could be the optimum laser features for each layer (such as power, intensity, duration etc) that results in high quality product.

The optimization module 424 is configured to optimize the energization pattern for each of the plurality of layers of the component for reduced defects including and not limited to reduced residual stress. The optimization module 424 also includes a neural network that optimizes the energization pattern and the defect parameters of the component. The defect parameters include porosity, delamination, residual stresses, etc.

The optimization module 424 also parses through sensor data received from the sensing unit 120 to determine layer defects in manufacturing a first layer of the plurality layers for the one or more regions 104c. The optimization module 424 determines modified parameters for the one or more energy transmitting devices 106an associated with the region 104c based on the layer defects. Further, based on the determined parameters, the energy optimizing device 110 transmits a control command to modifying parameters of the energy device 106an (to compensate for the layer defects in the region 104c.

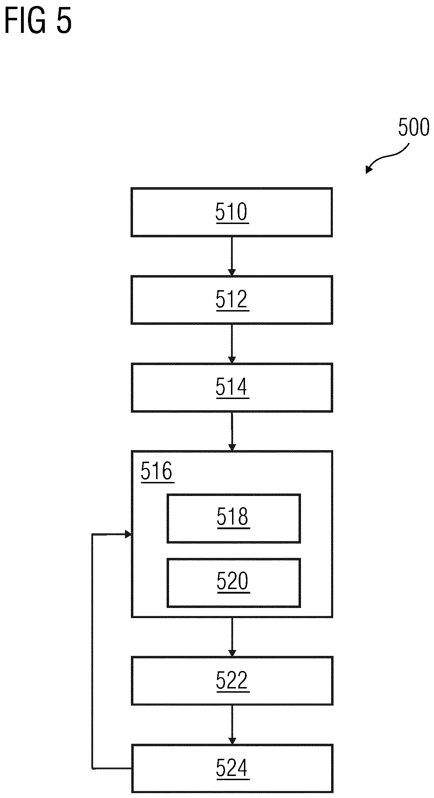

FIG 5 illustrates steps performed in a method 500 for additively manufacturing a component according to the present invention. The method begins by employing multiple energy transmitting devices to manufacture the component step 510. At step 512, a simulation of the component is generated to determine how the component will operate after manufacture. Further at step 514, component geometry is generated based on the simulation of the component.

At step 516, an energization pattern for each of the layers of the component is determined based on the component geometry. The step 516 includes step 518 in which the energization pattern for each of the layers of the component are learnt from the component geometry. The step learning includes supervised and unsupervised learning techniques. The step 516 also includes step 520, which is the learning module that has several AI algorithms built in which performs supervised and unsupervised learning tasks on the information received from other the steps 510,512,514,518,522 & 524 and suggests optimum parameters for the energy transmitting devices for a given layer. Accordingly, at step 520, layer defects in each layer are determined and modified parameters for the energy transmitting devices are determined.

At step 522, the energy transmitting device parameters are selectively modified to reduce defects based on the step 520. At step 524, the energy transmitting devices are selectively energized, simultaneously, based on the energization pattern. Accordingly, at step impact of the energy transmitting devices localized to associated regions in each layer. The steps of 516 to 524 are repeated to additively manufacture the component within a predetermined tolerance. The method 500 is repeated to ensure quality of the component and the productivity is maintained. When the quality meets the predetermined tolerance set by a user, the component is printed.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.
FIG 1
   system 100
   work space 102
   regions 104
   laser sources 106a1-106an, 106b1-106bn and 106c1-106cn
   energy transmitting devices 106
   energy optimizing device 110
   computing unit 112
   memory 114
   sensing unit 120
   communication unit 130
   Graphical User Interface (GUI) 140
   communication network 150.
FIG 2
   active laser sources 210
   non-active laser sources 220
FIG 3
   laser pattern 310
FIG 4
   simulation module 416
   geometry module 418
   energizing module 420
   learning module 422
   optimization module 424

## Claims

1. A system (100) for additively manufacturing a component, wherein the component includes a plurality of layers, the system (100) comprising:
a plurality of energy transmitting devices (106) associated with at least one of a plurality of regions (104) of a work space (102) which when the component is being manufactured houses the component and wherein the plurality of regions (104) in the work space (102) is associated with regions of the component when manufactured,
the system **characterized by**:
an energy optimizing device (110) comprising a memory (114) with a computing unit (112) configured to selectively energize the plurality of the energy transmitting devices (106), whereby the system is configured to manufacture each of the plurality of layers for the plurality of regions (104) simultaneously.

2. The system (100) as claimed in claim 1, wherein the plurality of energy transmitting devices (106) is an array of laser sources.

3. The system (100) as claimed in claim 1, wherein the memory (114) comprises:
a simulation module (416) configured to generate a simulation of the component, wherein the simulation comprises component parameters including geometry, residual stress and high stress regions;
a geometry module (418) configured to determine component geometry based on the simulation of the component;
an energizing module (420) configured to determine an energization pattern for each of the plurality of layers of the component based on the component geometry, wherein the energizing module (420) selectively energizes the plurality of the energy transmitting devices (106) simultaneously and whereby the system (100) is capable of manufacturing the component repeatedly within a predetermined tolerance.

4. The system (100) as claimed in claim 3, wherein the energizing module (420) comprises:
a learning module (422) configured to learn the energization pattern for each of the plurality of layers of the component from the component geometry; and
an optimization module (424) configured to optimize the energization pattern for each of the plurality of layers of the component for reduced defects including reduced residual stress.

5. A method for additively manufacturing a component, wherein the component includes a plurality of layers, the method comprising:
employing a plurality of energy transmitting devices (106) to manufacture the component, the method **characterized by**:
selectively energizing the plurality of the energy transmitting device to manufacture each of the plurality of layers for plurality of regions (104) simultaneously, wherein the plurality of regions (104) are associated with regions of the component when manufactured.

6. The method as claimed in claim 5, further comprising:
generating a simulation of the component, wherein the simulation comprises component parameters including residual stress and high stress regions;
determining component geometry based on the simulation of the component;
determining an energization pattern for each of the plurality of layers of the component based on the component geometry; and
selectively energizing the plurality of the energy transmitting devices (106) simultaneously based on the energization pattern.

7. The method as claimed in claim 6, wherein determining an energization pattern for each of the plurality of layers of the component based on the component geometry, comprises:
learning the energization pattern for each of the plurality of layers of the component from the component geometry; and
optimizing the energization pattern for each of the plurality of layers of the component for reduced defects including reduced residual stress.

8. The method as claimed in claim 7, further comprising:
localizing impact of the plurality of energy transmitting devices (106) to associated regions of the plurality of regions (104) and in each of the plurality of layers.

9. The method as claimed in claim 5, optimizing the energization pattern comprises:
selectively modifying parameters of at least one energy transmitting device associated with at least one region of the plurality of regions (104) for reduced defects.

10. The method as claimed in claim 9, further comprising:
determining layer defects in manufacturing a first layer of the plurality layers for the at least one region;
determining modified parameters for the at least one energy transmitting device associated with at least one region based on the layer defects; and
modifying parameters of the at least one energy device associated with the at least one region to compensate for the layer defects.

11. The method as claimed in claim 5, further comprising:
additively manufacturing the component repeatedly within a predetermined tolerance.

12. A device to enable additive manufacturing of a component, the component comprising a plurality of layers, the device comprises:
a receiver to receive sensor data from a plurality of sensors associated with the FSW operation;
a computing unit (112) comprising at least one processor; and
a memory (114) communicatively coupled to the at least one processor, the memory (114) comprising:
an energizing module (420) configured selectively energizes a plurality of energy transmitting devices (106) simultaneously for each layer of the plurality of layers of the component.

13. The device (110) as claimed in claim 12, wherein the memory (114) further comprises:
a simulation module (416) configured to generate a simulation of the component; and
a geometry module (418) configured to determine the component geometry based on the simulation of the component.

14. The device (110) as claimed in claim 12, wherein the energizing module (420) comprises:
a learning module (422) configured to learn an energization pattern for each of the plurality of layers of the component from the component geometry; and
an optimization module (424) configured to optimize the energization pattern for each of the plurality of layers of the component for reduced defects including reduced residual stress.

15. The device (110) as claimed in claim 12 is an edge computing device.
